# EUROPEAN PATENT SPECIFICATION

(11) **EP 2 565 502 B1**
(45) Date of publication and mention of the grant of the patent: **31.05.2017**
(21) Application number: 11774434.2
(22) Date of filing: 14.03.2011
(51) Int. Cl.: F16K 11/087, F16K 31/52, F16K 35/12, F16K 17/04, F16K 5/06, F16K 5/10, F16K 15/18

(54) **TAP FOR WATER SUPPLY PIPES**
HAHN FÜR WASSERZUFUHRROHRE
ROBINET POUR CONDUITES D'ACHEMINEMENT D'EAU

(30) Priority: 26.04.2010 ES 201030603
(43) Date of publication of application: 06.03.2013
(73) Proprietor: Alcaraz Sencianes, Rafael, 17006 Girona (ES); Lorenzo Felip, Jaime, 17006 Girona (ES)
(72) Inventor: Alcaraz Sencianes, Rafael, 17006 Girona (ES); Lorenzo Felip, Jaime, 17006 Girona (ES)
(74) Representative: Intès, Didier Gérard André
(86) International application number: PCT/ES2011/000071
(87) International publication number: WO 2011/135119

(56) References cited:
- EP-A2- 1 681 520
- DE-A1- 2 531 809
- DE-U1- 29 805 063
- ES-A6- 2 021 929
- ES-T3- 2 082 539
- ES-T3- 2 344 577
- ES-U- 157 607
- FR-A1- 2 566 872
- JP-A- 59 013 170
- US-A- 5 937 890

## Description

### Field of the Art

The present invention relates to controlling flow in water supply pipes, particularly relating to the supply from supply systems to consumers, proposing a ball-type tap allowing four functional positions corresponding to an open flow arrangement, a closed flow arrangement, a restricted flow arrangement and a minimum flow arrangement to cover the different circumstances that may arise in supplying water to consumers.

### State of the Art

There are various types of taps in the industry to open and close fluid pipes, such as those having a ball with a through hole, the rotation of which determines the communication or interruption of flow between two pipes coupled on either side to the tap.

Conventional taps of that type are efficient for closing and opening the pipes of application, but in specific services, as in the supply of water from a supply system to paying consumers, circumstances arise which can change depending on the users, such that in addition to opening and closing arrangement, other partial supply arrangements may also be of interest according to the particularities of each user.

To that end, the flow rate through supply pipes is to be regulated, which conventional opening and closing taps are not prepared for, so the flow rate is roughly regulated by means of a partial rotation of the tap between the open and closed positions, said regulation being rather imprecise. FR2566872 discloses a tap according to the preamble of claim 1.

### Object of the Invention

The invention proposes a tap for water supply pipes, of the type comprising a ball that can be rotated to create different functional positions, the tap proposed according to one embodiment being envisaged so to that it allows creating in precise positions an open flow arrangement, a closed flow arrangement, a restricted flow arrangement and a minimum flow arrangement.

To that end, said tap object of the invention comprises a rotational ball that can be rotated between four positions, with 90° rotations between the different positions, said ball having a duct open from a side area to the middle area, from where it continues with another duct which opens facing perpendicularly downwards, while two other smaller ducts of different diameters communicate with the first duct from respective side positions perpendicular to the latter, the ball being provided in the upper part with a slot in which a pin that can be rotated by means of an operating lever is coupled.

A functionally advantageous tap is thereby obtained that can be used to create four positions that allow covering the various contingencies that may occur in the service for supplying water to consumers, allowing the creation of an open flow arrangement in which the entire flow arriving at the tap passes through it, a closed flow arrangement in which the flow circulation through the tap it completely cut off, a restricted flow arrangement to provide a reduced supply to consumers during restriction periods, and a minimum flow arrangement to supply consumers with a minimum flow to cover basic needs in special situations (non-payment, temporary vacancy, etc.).

### Description of the Drawings

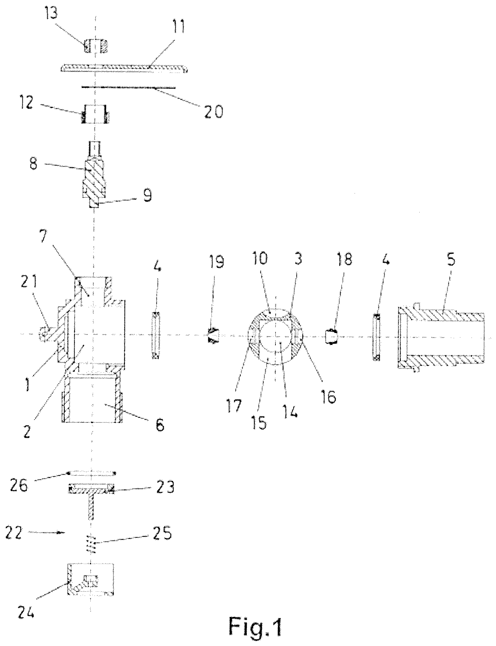

Figure 1 shows a sectioned exploded view of the assembly of a water tap formed according to the invention.

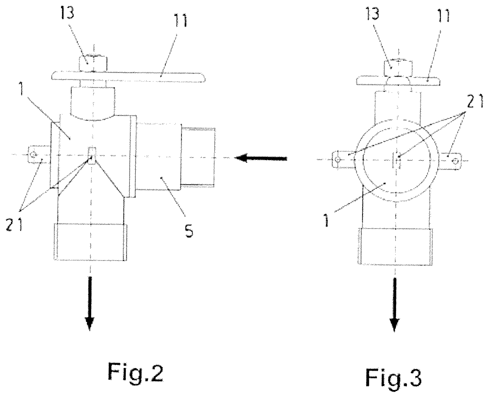

Figure 2 is a side view of the previous tap assembled.
Figure 3 is a profile view with respect to the preceding figure.

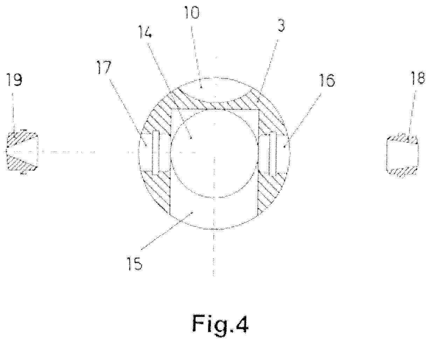

Figure 4 is a sectioned view of the ball of the tap with two bushings determining restricted flow and minimum flow, in exploded view with respect to the assembly in said ball.
Figure 5 is a sectioned side view of the tap in the open flow position.
Figure 6 is a top plan view of the tap in the position in the preceding figure.
Figure 7 is a sectioned side view of the tap in the closed flow position.
Figure 8 is a top plan view of the tap in the position in the preceding figure.
Figure 9 is a sectioned side view of the tap in the restricted flow position.
Figure 10 is a top plan view of the tap in the position in the preceding figure.
Figure 11 is a sectioned side view of the tap in the minimum flow position.
Figure 12 is a top plan view of the tap in the position in the preceding figure.
Figure 13 is a sectioned side view of an embodiment of the tap with a lower outlet bent horizontally.

### Detailed Description of the Invention

The object of the invention relates to a tap for water supply pipes to supply water from supply systems to consumers, comprising a body (1) forming a housing (2) in which a ball (3) is arranged as a water-tight assembly between gaskets (4), closed by means of a laterally coupled tubular bushing (5), the body (1) forming an outlet duct (6) in the lower part that communicates with the housing (2), while the upper part forms a duct (7) through which a pin (8) provided with an end conformation (9) fitting in a groove (10) of the ball (3) is inserted and incorporating at the other end an operating lever (11) for actuating rotation of the ball (3) through the pin (8).

In the assembly arrangement the pin (8) is secured with water-tight coupling with respect to the body (1) of the tap by means of a packing gland nut (12), while the lever (11) is secured on the pin (8) by means of a lock nut (13).

The ball (3) has a duct (14) extending from a side area to the middle area, from where it continues with another duct (15) which opens facing perpendicularly downwards.

Furthermore, two other smaller ducts (16 and 17) in which there are arranged respective bushings (18 and 19) determining different flow diameters open towards the duct (14) perpendicularly from respective side areas. According to the invention, the bushings (18 and 19) are made of Teflon (TM). With that arrangement, the lower duct (15) of the ball (3) communicates with the lower duct (6) of the body (1) of the valve and, depending on the angular position of the ball (3), according to the rotational operation with the lever (11), the duct (14) or one of the smaller ducts (16 and 17) are communicated with the duct of the tubular bushing (5), or the blind part opposite the duct (14) can be arranged to face said duct of the tubular bushing (5), said positions resulting from partial 90° rotations of the ball (3) by means of operating with the lever (11).

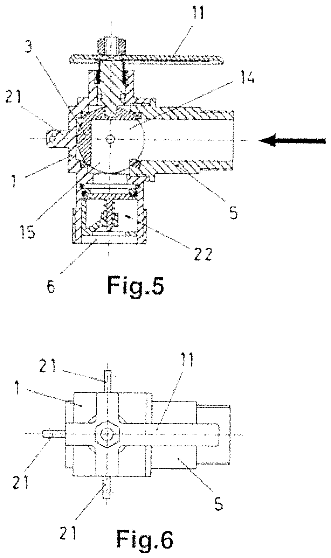

So by connecting the tubular bushing (5) to the flow arriving part of a water supply pipe and the duct (6) to the part going towards the supply of application, the tap allows creating an open flow position, as shown in Figures 5 and 6, placing the ball (3) with the duct (14) so it faces the duct of the tubular bushing (5), such that the arriving flow passes through the ball (3) entirely, entering through the tubular bushing (5) and exiting through the duct (6).

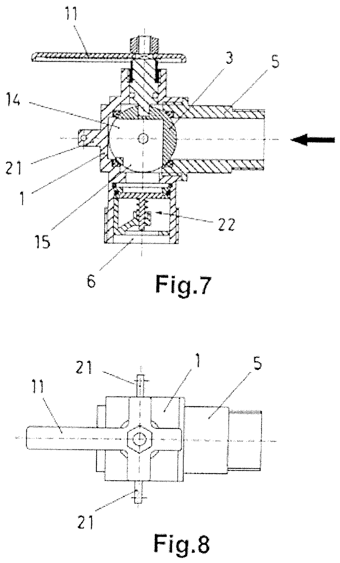

A closed flow position is created by means of a 180° rotation of the ball (3) with respect to the previous position, as shown in Figures 7 and 8, in which the flow that arrives and enters through the tubular bushing (5) is completely cut off by the ball (3), such that no flow whatsoever arrives at the duct (6).

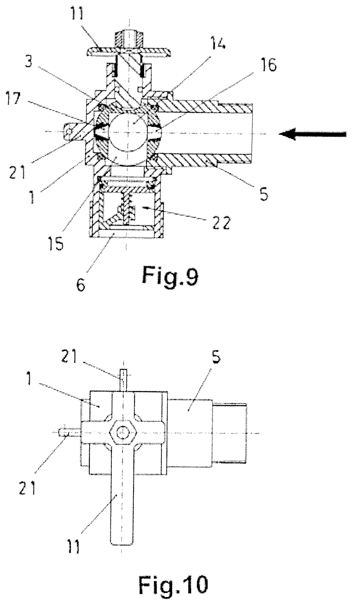

Respective circulation positions for a reduced flow through the tap are further created by means of a 90° rotation of the ball (3) towards either side from any of the previous positions, in one of which positions, the duct of the tubular bushing (5) is arranged to face the duct (16) provided with a reduced flow bushing (18), as shown in Figures 9 and 10, such that the flow arriving at and entering through the tubular bushing (5) flows only partially through the ball (3) to exit through the duct (6), which allows establishing, for example, a restricted supply service when the supply must comply with limitations of the flow provided to users.

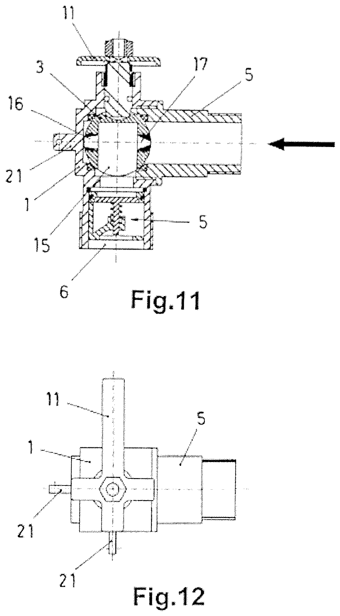

In the position opposite to the previous one, the duct of the tubular bushing (5) is arranged to face the duct (17) provided with a minimum flow bushing (19), as shown in Figures 11 and 12, such that only a minimum amount of the flow arriving at and entering through the tubular bushing (5) passes through the ball (3) to the duct (6), being able to create with said position a supply for users for only basic needs in special situations, such as non-payment of water bills, temporary vacancy of the home being supplied, etc.

There is incorporated a band (20) associated with the operating lever (11) for rotating the ball (3) by means of the pin (8), said band (20) being intended to form a sealed retention of the tap in any of the functional positions, pivots (21) provided with a hole being provided in the body (1) of the tap, in which hole the free end of the band (20) can be selectively fitted and assured with a sealing cord to immobilize the tap in the desired functional position.

A check valve (22) formed by a piston (23) axially guided with respect to a support body (24) and pushed by a spring (25) towards a closure seating in which there is arranged a gasket (26), said check valve (22) forming a one-way flow circulation direction through the tap is arranged in the outlet duct (6) of the tap.

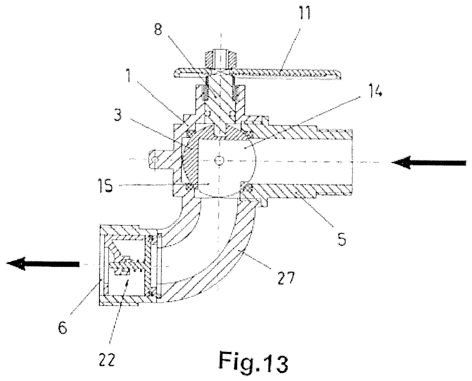

In the structural embodiment, the tap can be configured in any shape to better adapt to the applications for which it is intended without this altering the functional concepts forming the object of the invention in reference to the possibility of selecting an open flow position, a closed flow position, a restricted flow position and a minimum flow position, for the applications of use. In that sense, the body (1) of the tap can form, for example, a bent prolongation (27) in the lower part for horizontally projecting the outlet duct (6), as depicted in Figure 13.

## Claims

1. A tap for water supply pipes, formed by a body (1) in which there is housed a ball (3) arranged as a water-tight assembly and with the possibility of rotating to create open and closed flow positions in the tap between an inlet duct and an outlet duct, wherein the ball (3) has a first duct (14) extending from a side area to a middle area, from where it continues with a second duct (15) which opens facing perpendicularly downwards, **characterized in that** two other smaller ducts (16 and 17) of different diameters open towards the first duct (14) perpendicularly from respective side areas, the second duct (15) being open towards the lower part facing an outlet duct (6) defining the body (1) of the tap, while depending on the rotation of the ball (3) the first duct (14) or any of the smaller ducts (16 and 17) or the blind part opposite the first duct (14) can be arranged to face an inlet duct formed by a tubular bushing (5) coupled to the body (1) of the tap, to create, respectively, an open flow position, a restricted flow position, a minimum flow position, or a closed flow position, through the tap, and wherein respective Teflon (TM) bushings (18 and 19) are arranged in the smaller holes (16 and 17) open in the sides of the ball (3), whereby different flow diameters are determined in said holes (16 and 17).

2. The tap for water supply pipes according to claim 1, **characterized in that** the functional open flow, restricted flow, minimum flow and closed flow positions are determined by means of successive 90º rotations of the ball (3) in its assembly housing in either direction.

3. The tap for water supply pipes according to claim 1, **characterized in that** a pin (8) incorporating an operating lever (11) for rotation is arranged coupled to the ball (3), a band (20) which can be fitted with respect to pivots (21) of the body (1) to seal any of the functional positions of the tap being connected to said lever (11).

4. The tap for water supply pipes according to claim 1, **characterized in that** a check valve (22), which determines a one-way direction of flow circulation through the tap is arranged in the outlet duct (6).

## Patentansprüche

1. Hahn für Wasserversorgungsrohre, der von einem Körper (1) gebildet ist, in welchem eine Kugel (3) untergebracht ist, die als wasserfeste Baugruppe und mit der Möglichkeit, eine Drehung auszuführen, angeordnet ist, um geöffnete und geschlossene Durchflusspositionen im Hahn zwischen einem Einlasskanal und einem Auslasskanal zu bilden, wobei die Kugel (3) einen ersten Kanal (14) aufweist, der sich von einem Seitenbereich zu einem Mittelbereich erstreckt, von wo aus es mit einem zweiten Kanal (15) weitergeht, welcher sich senkrecht nach unten gerichtet öffnet,
**dadurch gekennzeichnet, dass**
zwei weitere kleinere Kanäle (16 und 17) von unterschiedlichen Durchmessern sich zum ersten Kanal (14) hin senkrecht von jeweiligen Seitenbereichen öffnen, der zweite Kanal (15) zum unteren Teil einem Auslasskanal (6), der den Körper (1) des Hahns festlegt, zugewandt geöffnet ist, während je nach Drehung der Kugel (3) der erste Kanal (14) oder einer der kleineren Kanäle (16 und 17) oder der Blindteil gegenüber dem ersten Kanal (14) so angeordnet werden können, dass sie einem Einlasskanal gegenüber liegen, der von einer röhrenförmigen Buchse (5) gebildet wird, die mit dem Körper (1) des Hahns verbunden ist, um jeweils eine geöffnete Durchflussposition, eine beschränkte Durchflussposition, eine minimale Durchflussposition oder eine geschlossene Durchflussposition zu bilden, und
wobei jeweilige Teflon ^{(™)}-Buchsen (18 und 19) in den kleineren Öffnungen (16 und 17) angeordnet sind, die in den Seiten der Kugel (3) geöffnet sind, wodurch unterschiedliche Durchflussdurchmesser in den Öffnungen (16 und 17) festgelegt werden.

2. Hahn für Wasserversorgungsrohre nach Anspruch 1, **dadurch gekennzeichnet, dass** die funktionalen geöffneten Durchfluss-, beschränkten Durchfluss-, minimalen Durchfluss- und geschlossenen Durchflusspositionen mittels fortlaufender 90°-Drehungen der Kugel (3) in deren Baugruppengehäuse in eine Richtung festgelegt werden.

3. Hahn für Wasserversorgungsrohre nach Anspruch 1, **dadurch gekennzeichnet, dass** ein Stift (8), der einen Bedienhebel (11) zur Drehung umfasst, mit der Kugel (3) verbunden angeordnet ist, wobei ein Band (20), welches mit Bezug zu Zapfen (21) des Körpers (1) eingerichtet sein kann, um jede der funktionalen Positionen des Hahns abzudichten, mit dem Hebel (11) verbunden ist.

4. Hahn für Wasserversorgungsrohre nach Anspruch 1, **dadurch gekennzeichnet, dass** ein Rückschlagventil (22), welches eine Einbahn-Flussrichtung durch den Hahn festlegt, im Auslasskanal (6) angeordnet ist.

## Revendications

1. Robinet pour conduites d'acheminement d'eau, formé par un corps (1) dans lequel est logée une bille (3) agencée comme un ensemble étanche à l'eau et avec la possibilité de tourner pour créer des positions découlement ouverte et fermée dans le robinet entre un conduit d'entrée et un conduit de sortie, dans lequel la bille (3) a un premier conduit (14) s'étendant à partir d'une zone latérale jusqu'à une zone centrale, à partir de laquelle elle continue avec un second conduit (15) qui s'ouvre en étant orienté perpendiculairement vers le bas, **caractérisé en ce que** :
deux autres conduits plus petits (16 et 17) de différents diamètres s'ouvrent vers le premier conduit (14) perpendiculairement à partir de zones latérales respectives, le second conduit (15) étant ouvert vers la partie inférieure faisant face à un conduit de sortie (6) définissant le corps (1) du robinet tandis que selon la rotation de la bille (3), le premier conduit (14) ou l'un quelconque des plus petits conduits (16 et 17) ou la partie borgne opposée au premier conduit (14) peut être agencé(e) pour faire face à un conduit d'entrée formé par un manchon tubulaire (5) couplé au corps (1) du robinet, afin de créer respectivement, une position d'écoulement ouverte, une position d'écoulement limitée, une position d'écoulement minimum ou une position d'écoulement fermée, à travers le robinet, et dans lequel :
des manchons respectifs (18 et 19) en Téflon (™) sont agencés dans les plus petits trous (16 et 17) s'ouvrent dans les côtés de la bille (3), moyennant quoi différents diamètres d'écoulement sont déterminés dans lesdits trous (16 et 17).

2. Robinet pour conduite d'acheminement d'eau selon la revendication 1, **caractérisé en ce que** la position d'écoulement ouverte fonctionnelle, la position d'écoulement limitée, la position d'écoulement minimum et la position d'écoulement fermée sont déterminées au moyen de rotations à 90° successives de la bille (3) dans son boîtier d'assemblage dans chaque direction.

3. Robinet pour conduite d'acheminement d'eau selon la revendication 1, **caractérisé en ce qu'**une broche (8) comprenant un levier de commande (11) pour la rotation est agencée en étant couplée à la bille (3), une bande (20) qui peut être montée par rapport aux pivots (21) du corps (1) pour sceller l'une quelconque des positions fonctionnelles du robinet qui est raccordé audit levier (11).

4. Robinet pour conduite d'acheminement d'eau selon la revendication 1, **caractérisé en ce qu'**un clapet de non-retour (22), qui détermine une direction unidirectionnelle de la circulation d'écoulement à travers le robinet, est agencé dans le conduit de sortie (6).
